# FASCICULE DE BREVET EUROPEEN

(11) **EP 2 517 412 B1**
(45) Date de publication et mention de la délivrance du brevet: **25.07.2018**
(21) Numéro de dépôt: 10809296.6
(22) Date de dépôt: 20.12.2010
(51) Int. Cl.: H04L 29/06, H04L 12/28

(54) **DISPOSITIF DE SECOURS D'UN DISPOSITIF DE CONTROLE UPnP**
SICHERUNGSVORRICHTUNG EINER UPNP-STEUERUNG
BACKUP DEVICE OF A UPnP CONTROLLER

(30) Priorité: 24.12.2009 FR 0959568
(43) Date de publication de la demande: 31.10.2012
(73) Titulaire: Orange, 75015 Paris (FR)
(72) Inventeur: MURPHY, Vincent, F-59110 La Madeleine (FR); AGRO, Roberto, F-92120 Montrouge (FR)
(74) Mandataire: Delumeau, François Guy
(86) Numéro de dépôt international: PCT/FR2010/052814
(87) Numéro de publication internationale: WO 2011/077031

(56) Documents cités:
- US-A1- 2005 102 695
- US-A1- 2006 253 782
- US-A1- 2008 088 633
- ING-RAY CHEN ET AL: "WARM STANDBY IN HIERARCHICALLY STRUCTURED PROCESS-CONTROL PROGRAMS", IEEE TRANSACTIONS ON SOFTWARE ENGINEERING, IEEE SERVICE CENTER, LOS ALAMITOS, CA, US LNKD- DOI:10.1109/32.310674, vol. 20, no. 8, 1 août 1994 (1994-08-01), pages 658-663, XP000484140, ISSN: 0098-5589

## Description

### Arrière-plan de l'invention

La présente invention se rapporte au domaine des réseaux de télécommunication dans lesquels les terminaux communiquent via le protocole UPnP défini par l'UPnP Forum et le Consortium DLNA. Il peut s'agir par exemple d'un réseau domestique (en anglais "home network"), ou d'un réseau local (LAN ou Local Area Network).

De façon connue, ce protocole vise à permettre l'interopérabilité et l'interconnexion d'équipements multimédia, sans configuration par l'utilisateur.

Dans la suite de la description, on parlera de réseau UPnP pour désigner un ensemble d'équipements interconnectés entre eux par réseau et utilisant le protocole UPnP pour communiquer entre eux à travers ce réseau.

Un dispositif est dit dispositif UPnP s'il est apte à communiquer au moyen d'un protocole de commande conforme au standard UPnP ou à un autre standard équivalent ou dérivé et/ou met en oeuvre une ou des fonctions définies dans un tel standard.

On distingue généralement, dans les architectures UPnP différents types de dispositifs UPnP: les dispositifs de contrôle DMC (Digital Media Controller), les serveurs de contenu DMS (Digital Media Server) et les dispositifs de restitution de contenu DMR (Digital Media Renderer), DMA (Digital Media Adapter) et DMP (Digital Media Player).

Dans un réseau UPnP, le dispositif de contrôle DMC permet de découvrir les autres dispositifs UPnP du réseau, les services offerts par ces dispositifs, et la mise en relation d'un serveur DMS avec un dispositif de restitution DMR ou DMA pour que ce dispositif de restitution restitue un contenu multimédia identifié au niveau du serveur DMS.

Il est fréquent que les utilisateurs définissent, via l'interface homme-machine d'une télécommande, une liste de contenus multimédia à restituer (souvent nommée en anglais « playlist »), composée d'une séquence prédéfinie de contenus multimédia devant être restitués les uns après les autres par des dispositifs de restitution DMR sélectionnés. Une telle liste sera nommée "liste de restitution".

Les contenus d'une liste de restitution peuvent être choisis un à un par l'utilisateur. Une telle liste peut aussi être constituée automatiquement par un dispositif de contrôle à partir des contenus stockés dans un dossier particulier, sélectionné par un utilisateur. En outre, certains dispositifs de contrôle DMC permettent de rajouter, en cours de restitution d'une liste, des contenus à la liste.

Le contrôle de la restitution de ces contenus est de la responsabilité du dispositif de contrôle DMC ; le dispositif de contrôle DMC a donc un rôle central.

Par conséquent, si le dispositif de contrôle DMC devient inopérant, en cas de panne par exemple, ou s'il quitte le réseau parce que, par exemple le terminal sur lequel il s'exécute passe en veille ou que la batterie du terminal est vide, la liste de restitution programmée par l'utilisateur ne peut être diffusée.

En particulier, lorsque la liste de restitution est définie à partir de plusieurs fichiers multimédia enregistrés séparément (et non d'un fichier "playlist" unique de type m3u, pls, asx qui contiendrait les données de différents contenus à restituer), la restitution des contenus de la liste est interrompue lors de la transition d'un contenu à un autre. En effet, le dispositif de contrôle DMC est responsable de piloter le dispositif de restitution visé en envoyant, à chaque transition, l'identifiant du prochain contenu à restituer ainsi que les éventuels paramètres nécessaires.

La deuxième hypothèse envisagée, à savoir celle où le dispositif de contrôle UPnP quitte le réseau est cependant susceptible de se produire fréquemment, car il devient usuel d'intégrer à la fois l'interface homme-machine permettant à l'utilisateur de choisir les contenus constituant une liste de restitution et le dispositif de contrôle UPnP en charge du contrôle de sa restitution dans des terminaux portables ultra légers multifonctions (téléphones portables, assistants personnels, ...).

Un des buts de l'Invention est de proposer une solution permettant la continuité de la restitution d'une liste de restitution dans un réseau UPnP même en cas de disparition du dispositif de contrôle UPnP.

### Objet et résumé de l'invention

Plus précisément, et selon un premier aspect, l'invention concerne un procédé de sécurisation pouvant être mis en oeuvre par un dispositif de contrôle UPnP dans un réseau, ce procédé comportant :
- une étape de découverte d'un dispositif de secours apte à commander une restitution de contenus d'une liste de restitution;
- une étape d'envoi, à ce dispositif de secours, d'une liste de restitution comportant au moins un contenu multimédia accessible via un serveur à restituer par au moins un dispositif de restitution, en vue d'une substitution du dispositif de contrôle UPnP par le dispositif de secours BCP pour la restitution d'au moins un des contenus de la liste de restitution transmise.

Corrélativement, et selon un deuxième aspect, l'invention concerne un procédé de secours d'un dispositif de contrôle UPnP pouvant être mis en oeuvre par un dispositif de secours dans un réseau, ce procédé comportant :
- une étape d'obtention, en provenance de ce dispositif de contrôle UPnP, d'une liste de restitution comportant au moins un contenu multimédia accessible via un serveur, à restituer par au moins un dispositif de restitution;
- une étape de découverte du serveur et du dispositif de restitution ;
- une étape de détection d'au moins un événement indiquant que le dispositif de secours doit se substituer au dispositif de contrôle UPnP; et
- une étape d'envoi, à ce dispositif de restitution, sur détection de cet événement, d'un message pour commander la restitution d'au moins un des contenus de la liste de restitution obtenue.

Ainsi, et d'une façon générale, l'invention propose un dispositif de secours apte à se substituer à un dispositif de contrôle UPnP pour contrôler la restitution d'une liste de restitution gérée par ce dispositif de contrôle UPnP lorsqu'il détecte un événement prédéterminé.

Préférentiellement, le dispositif de secours est apte à envoyer un message de signalement de sa présence dans le réseau afin de pouvoir être détecté par le dispositif de contrôle UPnP.

Dans un mode particulier de réalisation, le procédé de sécurisation selon l'invention comporte une étape d'envoi d'un message de notification au dispositif de secours pour qu'il prenne le contrôle de la restitution des contenus de la liste de restitution envoyée. La réception de ce message de notification constitue, dans ce mode de réalisation, un événement du procédé de secours au sens de l'invention.

L'envoi du message de notification peut par exemple être à l'initiative de l'utilisateur et être déclenché via une interface homme-machine du dispositif de contrôle UPnP, déporté ou non.

L'envoi du message de notification peut aussi être effectué automatiquement lorsque le dispositif de contrôle UPnP détecte une transition vers un état d'indisponibilité de ce dispositif de contrôle UPnP.

Dans un mode particulier de réalisation de l'invention, l'envoi de la liste de restitution par le dispositif de contrôle UPnP et son obtention par le dispositif de secours s'effectuent dans le cadre d'une étape générale de synchronisation entre une liste de restitution gérée par le dispositif de contrôle UPnP et une liste de restitution maintenue par le dispositif de secours.

Autrement dit, dans ce mode de réalisation, dès que le dispositif de contrôle UPnP détecte un changement dans sa liste de restitution (modification, suppression, ajout d'un contenu), il le notifie au dispositif de secours pour que celui-ci puisse mettre à jour sa propre liste de restitution, miroir de la liste de restitution gérée par le dispositif de contrôle. Ainsi, le dispositif de contrôle UPnP DMC et le dispositif de secours sont systématiquement synchronisés lorsque la liste de restitution est modifiée.

Ainsi, la quantité d'informations devant être envoyée par le dispositif de contrôle UPnP au dispositif de secours lorsque ce dispositif de contrôle devient inopérant (mise en veille par exemple) est minimum, voire nulle.

Dans un mode particulier de réalisation, le message de notification comporte une identification d'un contenu en cours de restitution, le dispositif de secours étant conçu pour se substituer au dispositif de contrôle UPnP en pilotant la restitution des contenus qui, dans la liste de restitution, suivent le contenu en cours de restitution, selon l'ordre de restitution choisi.

Dans un mode particulier de réalisation de l'invention, cet identifiant est un rang du contenu en cours de restitution dans sa liste de restitution. Cette caractéristique permet au dispositif de secours de poursuivre la restitution des contenus selon la séquence choisie par l'utilisateur avec une quantité de données échangées minimum entre ces équipements.

Préférentiellement, ce processus d'envoi des notifications et des listes de restitution au dispositif de secours s'exécute en tâche de fond afin de ne pas perturber le contrôle de la restitution des contenus par le dispositif de contrôle UPnP.

Dans un mode de réalisation de l'invention, le dispositif de secours est apte à détecter l'indisponibilité du dispositif de contrôle UPnP, par exemple par un mécanisme connu de l'homme du métier sous l'expression « watchdog ».

Ainsi, dans un mode particulier de réalisation, le procédé de sécurisation selon l'invention comporte en outre une étape d'envoi par le dispositif de contrôle UPnP d'un message de présence sur réception d'une requête du dispositif de secours. L'absence de réception, au bout d'un temps déterminé suite à l'envoi d'une requête au dispositif de secours, d'un message du dispositif de contrôle UPnP, constitue, dans ce mode de réalisation, un événement du procédé de secours au sens de l'invention.

L'invention vise aussi un dispositif de contrôle UPnP apte à mettre en oeuvre le procédé de sécurisation mentionné ci-dessus, ce dispositif de contrôle comportant :
- des moyens de découverte d'un dispositif de secours apte à commander une restitution de contenus d'une liste de restitution;
- des moyens d'envoi, à ce dispositif de secours, d'une liste de restitution comportant au moins un contenu multimédia accessible via un serveur, à restituer par au moins un dispositif de restitution, en vue d'une substitution du dispositif de contrôle UPnP par le dispositif de secours pour la restitution d'au moins un des contenus de la liste de restitution transmise.

L'invention vise aussi un dispositif de secours d'un dispositif de contrôle UPnP dans un réseau, ce dispositif de secours étant apte à mettre en oeuvre un procédé de secours d'un dispositif de contrôle UPnP tel que mentionné ci-dessus. Ce dispositif de secours comporte :
- des moyens d'obtention, en provenance du dispositif de contrôle UPnP, d'une liste de restitution comportant au moins un contenu multimédia accessible via un serveur, à restituer par au moins un dispositif de restitution ;
- des moyens de découverte du serveur ;
- des moyens de découverte du dispositif de restitution
- des moyens de détection d'au moins un événement indiquant que le dispositif de secours doit se substituer au dispositif de contrôle UPnP; et
- des moyens d'envoi au dispositif de restitution, suite à la détection de cet événement, d'un message pour commander la restitution d'au moins un des contenus de la liste de restitution obtenue.

Dans un mode particulier de réalisation, le procédé de sécurisation selon l'invention comporte en outre :
- une étape d'envoi au dispositif de secours d'une requête pour reprendre le contrôle de la restitution de la liste de restitution ; et
- une étape d'obtention, en réponse à cet envoi, d'une information sur l'avancement de la restitution de la liste de restitution.

Corrélativement, dans ce mode de réalisation, le procédé de secours selon l'invention comporte
- une étape de réception d'une requête du dispositif de contrôle UPnP pour reprendre le contrôle de la restitution de la liste de restitution ;
- une étape de cessation du contrôle de la restitution de la liste de restitution ; et
- une étape d'envoi, au dispositif de contrôle UPnP, d'une information sur l'avancement de la restitution de la liste de restitution.

Selon cette caractéristique, le dispositif de contrôle UPnP peut reprendre le contrôle de la restitution de la liste de restitution, par exemple lorsqu'il redevient actif.

Dans un mode particulier de réalisation, les différentes étapes du procédé de sécurisation et/ou du procédé de secours sont déterminées par des instructions de programmes d'ordinateurs.

En conséquence, l'invention vise aussi :
- un programme d'ordinateur sur un support d'informations, ce programme étant susceptible d'être mis en oeuvre dans dispositif de contrôle UPnP, ce programme comportant des instructions adaptées à la mise en oeuvre des étapes du procédé de sécurisation tel que mentionné ci-dessus ; et
- un programme d'ordinateur sur un support d'informations, ce programme étant susceptible d'être mis en oeuvre dans dispositif de secours, ou plus généralement dans un ordinateur, ce programme comportant des instructions adaptées à la mise en oeuvre des étapes du procédé de secours tel que mentionné ci-dessus.

L'un ou l'autre de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un terminal incorporant un dispositif de contrôle UPnP conforme à l'invention et un dispositif de secours conforme à l'invention dans un exemple particulier de mise en oeuvre de l'invention ; - la figure 2 représente une liste de restitution pouvant être utilisée dans un mode particulier de réalisation de l'invention ;
- la figure 3 représente, sous forme d'organigramme, les principales étapes d'un procédé de sécurisation conforme à un mode particulier de réalisation de l'invention ; et
- la figure 4 représente, sous forme d'organigramme, les principales étapes d'un procédé de secours conforme à un mode particulier de réalisation de l'invention.

### Description détaillée d'un mode de réalisation

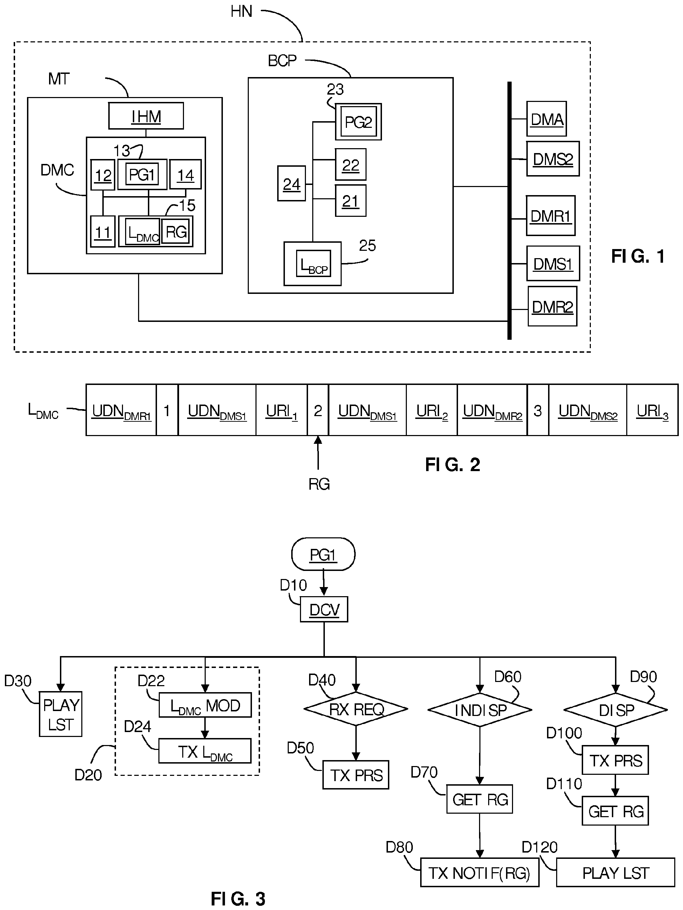

Sur la **figure 1** on a représenté un réseau domestique comportant :
- un terminal MT incorporant une interface homme-machine IHM et un dispositif de contrôle UPnP conforme à l'invention ;
- un dispositif de secours BCP conforme à l'invention ;
- deux serveurs de contenus multimédia DMS1, DMS2 ; et
- deux dispositifs de restitution de contenus multimédia DMR1; DMR2.

Dans l'exemple de réalisation décrit ici, le terminal MT comporte une interface homme-machine IHM permettant à un utilisateur de définir une liste de restitution L_{DMC} telle que représentée à la figure 2.

Dans l'exemple décrit ici, cette liste de restitution comporte trois contenus destinés à être diffusés séquentiellement selon leurs rangs :
- contenu de rang 1 : un contenu multimédia d'identifiant URI₁, accessible auprès du serveur DMS1 d'identifiant UDN_{DMS1}, par le dispositif de restitution DMR1 d'identifiant UDN_{DMR1} ;
- contenu de rang 2 : un contenu multimédia d'identifiant URI₂, accessible auprès du serveur DMS1 d'identifiant UDN_{DMS1}, par le dispositif de restitution DMR1 d'identifiant UDN_{DMR1} ;
- contenu de rang 3 : un contenu multimédia d'identifiant URI₂, accessible auprès du serveur DMS2 d'identifiant UDN_{DMS2}, par le dispositif de restitution DMR2 d'identifiant UDN_{DMR2}.

Une liste de restitution est codée sous forme d'une liste d'éléments identifiés chacun par un numéro de rang, chaque élément représentant un contenu et comprenant au moins un identifiant de contenu, un identifiant de serveur de contenu et un identifiant de dispositif de restitution. D'autres informations sont susceptibles d'être fournies pour chaque contenu dans ces éléments.

Dans cet exemple de liste de restitution, deux dispositifs de restitution DMR1 et DMR2 sont concernés. En alternative, une liste de restitution est définie par dispositif de restitution et ne contient que les contenus à restituer par un seul dispositif de restitution. Dans ce cas, la liste de restitution est codée sous forme d'une liste d'éléments comprenant chacun un identifiant de contenu et un identifiant de serveur de contenu.

En outre, les données codant la liste de restitution peuvent comprendre une indication d'un mode de restitution : par exemple, une indication selon laquelle la restitution de l'ensemble des contenus de la liste doit être répétée plusieurs fois (mode "repeat") ou que les contenus de la liste doivent être restitués dans un ordre aléatoire (mode "shuffle"). L'ordre de restitution des contenus de la liste peut donc être affecté par de tels paramètres, la liste de restitution est donc transmise avec ces paramètres.

Quelle que soit la manière de définir les listes de restitution, celles-ci sont traitées de la même manière en ce qui concerne leur transfert vers le dispositif de secours BCP.

Dans l'exemple décrit ici, la mémoire non volatile 15 comporte également un pointeur RG sur le rang d'un contenu en cours de restitution dans le réseau.

Le terminal MT peut être fixe ou mobile.

Dans l'exemple de réalisation décrit ici, le dispositif de contrôle UPnP a l'architecture matérielle d'un ordinateur. Il comporte ainsi un processeur 11, une mémoire vive 12, une mémoire morte de type ROM 13, des moyens de communication 14 pour communiquer à travers le réseau MN, sous forme par exemple d'une interface WIFI dans le cas d'un terminal MT mobile, et une mémoire non volatile réinscriptible 15 apte à mémoriser la liste de restitution L_{DMC}.

La mémoire morte de type ROM 13 constitue un support d'informations conforme à l'invention. Elle mémorise un programme d'ordinateur PG1 conforme à l'invention, permettant l'exécution d'un procédé de sécurisation selon l'invention dont les principales étapes D10 à D120 seront décrites en référence à la figure 3.

Le dispositif de contrôle UPnP DMC est apte, comme de façon connue à découvrir les dispositifs UPnP du réseau HN. Il utilise à cet effet le protocole SSDP (Simple Service Discovery Protocol). On rappelle que selon ce protocole, lorsqu'un dispositif de contrôle DMC rejoint le réseau, il recherche et découvre les dispositifs UPnP, grâce à des messages diffusés par ces dispositifs dans lesquels ils annoncent les services UPnP qu'ils peuvent offrir.

Dans l'exemple de réalisation décrit ici, le dispositif de secours BMC est apte à se signaler en diffusant ses services conformément au protocole SSDP.

Par conséquent, dans l'exemple décrit ici, le dispositif de contrôle UPnP DMC est apte à découvrir le dispositif de secours BMC, les deux serveurs DMS1, DMS2 et les deux dispositifs de restitution DMR1, DMR2.

Le dispositif de contrôle UPnP DMC incorporé dans le terminal MT est apte à contrôler la restitution des contenus définis dans la liste de restitution L_{DMC}.

Pour rappel, pour déclencher la restitution d'un contenu particulier, le dispositif de contrôle UPnP DMC :
- récupère, auprès d'un répertoire CDS (en anglais « Content Directory Service ») du serveur DMS1, DMS2, un identifiant URI du contenu à diffuser ;
- spécifie au dispositif de restitution DMR1, DMR2 sélectionné cet identifiant de contenu en utilisant l'action UPnP « SetAVTransportURI » du service AVTransport ; et
- lance la lecture du contenu sur le dispositif de restitution DMR1, DMR2 en appelant l'action UPnP « Play » sur le service AVTransport.

Dans l'exemple de réalisation décrit ici, le dispositif de secours BMC a l'architecture matérielle d'un ordinateur. Il comporte ainsi un processeur 21, une mémoire vive 22, une mémoire morte de type ROM 23, des moyens de communication 24 pour communiquer à travers le réseau MN, et une mémoire non volatile réinscriptible 25.

Dans le mode de réalisation décrit ici, le dispositif de secours BCP est implémenté comme un service UPnP, de sorte que la communication entre le dispositif de contrôle UPnP DMC et le dispositif de secours BMC se fait selon le protocole UPnP. En variante, le dispositif de contrôle UPnP DMC et le dispositif de secours DMC peuvent communiquer selon un protocole propriétaire.

Le dispositif de secours BMC est apte à découvrir les autres dispositifs UPnP du réseau HN, serveurs de contenus ou dispositifs de restitution, en mettant en oeuvre le protocole SSDP comme déjà décrit.

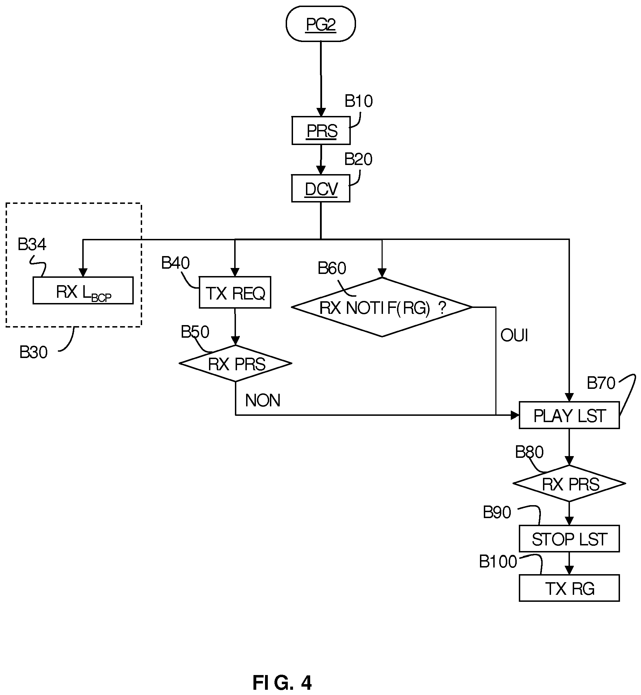

La mémoire morte de type ROM 23 constitue un support d'informations conforme à l'invention. Elle mémorise un programme d'ordinateur PG2 conforme à l'invention, permettant l'exécution d'un procédé de secours selon l'invention dont les principales étapes B10 à B100 seront décrites en référence à la figure 4.

Conformément à l'invention, le dispositif de secours BMC est apte à se substituer au dispositif de contrôle UPnP DMC pour prendre le relai dans le contrôle de la restitution des contenus sélectionnés par l'utilisateur.

Dans le mode de réalisation décrit ici, le dispositif de contrôle UPnP et le dispositif de secours BMC sont synchronisés de façon permanente de sorte que le dispositif de contrôle BMC garde une connaissance fidèle de la programmation de l'utilisateur.

La mémoire non volatile 25 mémorise par conséquent une liste de restitution L_{BMC} miroir de la liste de restitution L_{DMC}.

En référence aux figures 3 et 4 nous allons maintenant décrire un scénario particulier de mise en oeuvre de l'invention.

Nous supposerons qu'au cours d'une étape B10 du procédé de secours, le dispositif de secours BMC signale sa présence sur le réseau par un message SSDP. Le dispositif de secours est par exemple implémenté en tant que service UPnP et met en oeuvre le protocole de découverte prévu dans UPnP, reposant sur l'envoi de messages SSDP.

Ce signalement permet la découverte du dispositif de secours BMC par le dispositif de contrôle UPnP DMC au cours d'une étape D10 du procédé de sécurisation.

Au cours de cette même étape D10, le dispositif de contrôle DMC découvre les autres équipements UPnP du réseau HN.

De façon similaire, le dispositif de secours BMC met en oeuvre le protocole SSDP pour découvrir, au cours d'une étape B20 du procédé de secours, les équipements UPnP du réseau HN.

Nous supposerons que l'utilisateur a défini la liste de restitution L_{DMC} et que celle-ci est mémorisée dans la mémoire non volatile 15 du dispositif de contrôle DMC. Le dispositif de contrôle DMC commence le contrôle de la restitution des contenus spécifiés dans cette liste au cours d'une étape D30.

Dans l'exemple décrit ici, le dispositif de contrôle UPnP DMC et le dispositif de secours BMC mettent en oeuvre une procédure de synchronisation en tâche de fond, respectivement au cours d'une étape générale D20 du procédé de sécurisation et au cours d'une étape générale B30 du procédé de secours.

Cette procédure de synchronisation vise à maintenir, au niveau du dispositif de secours, une liste de restitution à jour par rapport à celle gérée par le dispositif de contrôle UPnP. En conséquence, toute modification de cette liste de restitution - que ce soit par ajout de contenu, suppression de contenu, modification d'ordre restitution, modification d'un paramètre impactant la restitution d'au moins un des contenus de cette liste de restitution ou autre modification - est signalée au dispositif de secours.

Par conséquent, le dispositif de secours BMC comporte, dans sa mémoire non volatile 25, une liste de restitution L_{BCP} image de la liste de restitution L_{DMC}. Plus précisément, lorsque le dispositif de contrôle UPnP DMC détecte (étape D22) une modification de sa liste de restitution L_{DMC}, il envoie (étape D24) un message au dispositif de secours BMC, ce message étant reçu par le dispositif de secours BMC au cours d'une étape B34 de son procédé de secours.

Le dispositif de secours BMC est conçu pour détecter au moins un événement indiquant que le dispositif de secours doit se substituer au dispositif de contrôle UPnP. Plusieurs variantes sont envisageables pour cette détection.

Dans une première variante de réalisation (mode "watchdog"), le dispositif de secours BMC envoie régulièrement (étape B40) une requête REQ, reçue par le dispositif de contrôle UPnP DMC au cours d'une étape D40 de son procédé de sécurisation pour vérifier que ce dispositif de contrôle UPnP DMC est toujours actif.

Le dispositif de contrôle UPnP DMC y répond par l'envoi d'un message de présence au cours d'une étape D50. Si le dispositif de contrôle BMC ne reçoit pas, dans un temps donné, de réponse à sa requête (test B50), il prend, au cours d'une étape B70, le contrôle de la restitution de la liste de restitution DMC.

Le message de présence comprend en outre, pour chaque liste de restitution gérée par le dispositif de contrôle UPnP DMC, une information donnant l'état d'avancement de la restitution de chacune de ces listes, par exemple une identification du contenu en cours de restitution dans chaque liste. Cette identification est soit un identifiant du contenu lui-même, soit le rang du contenu dans la liste considérée.

Dans cette première variante, l'événement détecté est donc l'absence de réception, au bout d'un temps déterminé suite à l'envoi d'une requête (étape B40) du dispositif de secours BCP, d'un message de présence du dispositif de contrôle UPnP DMC.

Dans une deuxième variante de réalisation, le dispositif de contrôle DMC est apte à détecter une transition vers un état d'indisponibilité au cours d'une étape D60 de son procédé de sécurisation. En pratique, par exemple, le système d'exploitation du terminal MT peut, lorsque le terminal MT entre en hibernation, déclencher une interruption interceptée par le dispositif de contrôle DMC.

Lorsque c'est le cas, le dispositif de contrôle UPnP obtient une identification du contenu en cours de restitution dans chaque liste de restitution qu'il gère. Cette identification est soit un identifiant du contenu lui-même, soit le rang RG du contenu dans la liste considérée enregistré dans la mémoire non volatile 25.

Au cours d'une étape D80, le dispositif de contrôle UPnP envoie alors au dispositif de secours BCP un message de notification pour l'informer de sa prochaine indisponibilité, ce message comprenant le rang RG obtenu à l'étape D70.

Ce message est reçu par le dispositif de secours BMC au cours d'une étape B60 de son procédé de secours.

Dans cette deuxième variante, l'événement détecté est donc la réception d'un message de notification provenant du dispositif de contrôle UPnP DMC.

Au cours de l'étape B70 déjà décrite, le dispositif de secours BCP prend le contrôle de restitution de la liste de restitution L_{BCP}, à partir du contenu identifié (rang RG) dans le message reçu à l'étape B50 ou B60, en envoyant un message de commande pour déclencher la restitution du contenu suivant dans l'ordre de restitution défini pour la liste en cours de restitution.

Ce message de commande n'est envoyé que lorsque le dispositif de secours BCP a reçu, du dispositif de restitution sur lequel la restitution est en cours, une notification indiquant la fin de la restitution d'un contenu de la liste (événement "Transport State", état "Stopped"), conformément à ce qui est prévu dans le protocole UPnP dans le dialogue entre un dispositif de contrôle UPnP et un dispositif de restitution UPnP. Cette notification ne sera transmise au dispositif de secours BCP que si celui-ci s'est abonné préalablement auprès du dispositif de restitution visé, aux notifications d'événement émises par ce dispositif de restitution.

Dans le mode de réalisation décrit ici, le procédé de sécurisation comporte une étape pour D90 permettant au dispositif de contrôle UPnP DMC de déterminer qu'il redevient disponible et actif (par exemple en cas de mise hors veille du terminal MT).

Lorsque c'est le cas, le dispositif de contrôle UPnP DMC envoie, au cours d'une étape D100, une requête au dispositif de secours BMC pour lui signaler sa présence dans le réseau HN et pour obtenir un état d'avancement de la restitution de la liste de restitution et lui indiquer qu'il souhaite reprendre le contrôle de la restitution de la liste de restitution. Ce message est reçu par le dispositif de secours au cours d'une étape B80 de son procédé de secours.

Sur réception de ce message, le dispositif de secours cesse de se substituer au dispositif de contrôle UPnP et arrête le contrôle de la restitution de la liste de restitution, au cours d'une étape B90.

Puis, au cours d'une étape B100, le dispositif de secours BMC envoie au cours d'une étape B100 le rang RG du contenu en cours de restitution. Optionnellement, le dispositif de secours BMC envoie, systématiquement ou sur demande du dispositif de contrôle UPnP DMC, la liste de restitution complète. En effet, si le dispositif de contrôle UPnP DMC n'a pas pu sauvegarder la liste, parce que le terminal MT sur lequel le dispositif de contrôle UPnP DMC s'exécutait s'est éteint, la liste de restitution n'est plus en mémoire et le dispositif de contrôle UPnP DMC doit la récupérer à nouveau pour poursuivre la restitution de la liste. Par contre, si le terminal MT est passé en veille, la liste de restitution est disponible en mémoire à la sortie de veille.

Ce rang RG est reçu par le dispositif de contrôle UPnP DMC au cours d'une étape D110 de son procédé de sécurisation. Il reprend alors, au cours d'une étape B120, le contrôle de la liste de restitution L_{BCP}, à partir du contenu de rang RG.

Dans l'exemple de réalisation qui vient d'être décrit, le dispositif de contrôle UPnP DMC découvre le dispositif de secours BMC par la mise en oeuvre du protocole SSDP, le dispositif de secours BMC étant implémenté sous la forme d'un service UPnP.

En variante, le dispositif de secours BMC pourrait incorporer un serveur apte à répondre à une requête prédéterminée de recherche émise par un client du dispositif de contrôle UPnP DMC,

Une telle requête, diffusée dans le réseau HN en mode « multicast » par le dispositif de contrôle UPnP DMC, lui permet de déterminer s'il existe dans ce réseau une entité qui soit apte à le secourir, autrement dit à prendre le relai du contrôle de la restitution d'une liste de restitution contrôlée par le dispositif de contrôle UPnP DMC, par exemple lorsque ce dernier entre en hibernation.

Dans un mode particulier de réalisation de l'invention, toute entité répondant à ce critère, insère, dans la réponse à la requête diffusée, avec ses données d'adressage, un poids représentatif de ses caractéristiques fonctionnelles ou de sa localisation, ce poids étant utilisé par le dispositif de contrôle UPnP DMC selon l'invention pour sélectionner un dispositif de secours.

## Revendications

1. Procédé de sécurisation mis en oeuvre par un dispositif de contrôle UPnP (DMC) dans un réseau (HN), ce procédé comportant :
- une étape (D10) de découverte d'un dispositif de secours (BCP), apte à commander une restitution de contenus d'une liste de restitution;
- une étape (D24) d'envoi, audit dispositif de secours (BCP), d'une liste de restitution (L_{DMC}) comportant au moins un contenu multimédia ;
une étape (D80) d'envoi d'un message de notification audit dispositif de secours (BCP), pour qu'il prenne le contrôle de la restitution des contenus de la liste de restitution (L_{DMC}) envoyée.

2. Procédé de sécurisation selon la revendication 1, **caractérisé en ce que** ladite étape d'envoi du message de notification est effectuée après détection (D60) par le dispositif de contrôle UPnP d'une transition vers un état d'indisponibilité dudit dispositif de contrôle UPnP (DMC).

3. Procédé de sécurisation selon la revendication 1 **caractérisé en ce que** ladite étape (D24) d'envoi de la liste de restitution (U_{DMC}) s'effectue dans le cadre d'une étape générale (D20) de synchronisation de ladite liste de restitution (L_{DMC}) avec une liste de restitution (L_{BCP}) dudit dispositif de secours (BCP).

4. Procédé de sécurisation selon la revendication 1, **caractérisé en ce qu'**il comporte en outre une étape (D50) d'envoi d'un message de présence sur réception (D40) d'une requête dudit dispositif de secours.

5. Procédé de sécurisation selon la revendication 1, **caractérisé en ce qu'**il comporte en outre :
- une étape (D100) d'envoi audit dispositif de secours d'une requête pour reprendre le contrôle de la restitution de ladite liste de restitution (U_{DMC}) ; et
- une étape (D110) d'obtention, en réponse audit envoi, d'une information (RG) sur l'état d'avancement de la restitution de ladite liste de restitution.

6. Dispositif de contrôle UPnP (DMC) comportant :
- des moyens (11, 14) de découverte d'un dispositif de secours (BCP) apte à commander une restitution de contenus d'une liste de restitution;
- des moyens (14) d'envoi, audit dispositif de secours (BCP), d'une liste de restitution (L_{DMC}) comportant au moins un contenu multimédia - des moyens d'envoi d'un message de notification audit dispositif de secours (BCP) pour qu'il prenne le contrôle de la restitution des contenus de la liste de restitution (L_{DMC}) envoyée.

7. Procédé de secours d'un dispositif de contrôle UPnP (DMC) mis en oeuvre par un dispositif de secours (BCP) dans un réseau, ledit procédé comportant :
- une étape (B34) d'obtention, en provenance dudit dispositif de contrôle UPnP, d'une liste de restitution (L_{DMC}) comportant au moins un contenu multimédia accessible via un serveur (DMS), à restituer par au moins un dispositif de restitution (DMR) ;
- une étape (B20) de découverte dudit serveur (DMS) ;
- une étape (B20) de découverte dudit dispositif (DMR) de restitution ;
- une étape (B40, B70) de détection d'au moins un événement indiquant que le dispositif de secours doit se substituer au dispositif de contrôle UPnP ; et
- une étape (D80) d'envoi, audit dispositif de restitution (DMR), sur détection dudit événement, d'un message pour prendre le relai dans le contrôle de la restitution d'au moins un des contenus de la liste de restitution obtenue.

8. Procédé de secours selon la revendication 7, dans lequel ledit événement est la réception d'un message de notification provenant du dispositif de contrôle UPnP (DMC).

9. Procédé de secours selon la revendication 7, dans lequel ledit événement est l'absence de réception, au bout d'un temps déterminé suite à l'envoi d'une requête du dispositif de secours (BCP), d'un message de présence du dispositif de contrôle UPnP (DMC).

10. Procédé de secours selon la revendication 7 **caractérisé en ce qu'**il comporte une étape (B10) d'envoi d'un message de signalement de la présence dudit dispositif de secours (BCP) dans ledit réseau.

11. Procédé de secours selon la revendication 7, **caractérisé en ce que** ladite étape (B34) d'obtention s'effectue dans le cadre d'une étape générale (B30) de synchronisation de ladite liste de restitution (L_{BCP}) avec une liste de restitution (U_{DMC}) dudit dispositif de contrôle (DMC)_{.}

12. Procédé de secours selon la revendication 7, **caractérisé en ce qu'**il comporte
- une étape (B80) de réception d'une requête dudit dispositif de contrôle UPnP (DMC) pour reprendre le contrôle de la restitution de ladite liste de restitution (U_{BCP}) ; et
- une étape (B90) de cessation du contrôle de la restitution de ladite liste de restitution ; et
- une étape (B100) d'envoi, audit dispositif de contrôle UPnP (DMC), d'une information (RG) sur l'avancement de la restitution de ladite liste de restitution.

13. Dispositif de secours (BCP) d'un dispositif de contrôle UPnP (DMC) pouvant être utilisé dans un réseau, ledit dispositif de secours comportant :
- des moyens (24) d'obtention, en provenance dudit dispositif de contrôle UPnP, d'une liste de restitution (L_{DMC}) comportant au moins un contenu multimédia accessible via un serveur (DMS), à restituer par au moins un dispositif de restitution (DMR) ;
- des moyens (21) de découverte dudit serveur (DMS) et dudit dispositif (DMR) de restitution;
- des moyens (21) de détection d'au moins un événement (B40, B70) indiquant que le dispositif de secours doit se substituer au dispositif de contrôle UPnP ; et
- des moyens (24) d'envoi audit dispositif de restitution (DMR), suite à la détection dudit événement, d'un message pour prendre le relai dans le contrôle de la restitution d'au moins un des contenus de la liste de restitution obtenue.

14. Support d'enregistrement (13) lisible par un ordinateur sur lequel est enregistré un programme d'ordinateur comprenant des instructions pour l'exécution des étapes du procédé de sécurisation selon l'une quelconque des revendications 1 à 5.

15. Support d'enregistrement (23) lisible par un ordinateur sur lequel est enregistré un programme d'ordinateur comprenant des instructions pour l'exécution des étapes du procédé de secours selon l'une quelconque des revendications 7 à 12.

## Patentansprüche

1. Sicherungsverfahren, das von einer UPnP-Kontrollvorrichtung (DMC) in einem Netz (HN) durchgeführt wird, wobei dieses Verfahren aufweist:
- einen Schritt (D10) des Findens einer Ersatzvorrichtung (BCP), die eine Wiedergabe von Inhalten einer Wiedergabeliste steuern kann;
- einen Schritt (D24) des Sendens einer mindestens einen Multimedia-Inhalt aufweisenden Wiedergabeliste (L_{DMC}) an die Ersatzvorrichtung (BCP);
- einen Schritt (D80) des Sendens einer Benachrichtigung an die Ersatzvorrichtung (BCP), damit sie die Kontrolle der Wiedergabe der Inhalte der gesendeten Wiedergabeliste (L_{DMC}) übernimmt.

2. Sicherungsverfahren nach Anspruch 1, **dadurch gekennzeichnet, dass** der Schritt des Sendens der Benachrichtigung nach Erfassung (D60) eines Übergangs in einen Zustand der Nichtverfügbarkeit der UPnP-Kontrollvorrichtung (DMC) durch die UPnP-Kontrollvorrichtung durchgeführt wird.

3. Sicherungsverfahren nach Anspruch 1, **dadurch gekennzeichnet, dass** der Schritt (D24) des Sendens der Wiedergabeliste (L_{DMC}) im Rahmen eines allgemeinen Schritts (D20) der Synchronisation der Wiedergabeliste (L_{DMC}) mit einer Wiedergabeliste (L_{BCP}) der Ersatzvorrichtung (BCP) durchgeführt wird.

4. Sicherungsverfahren nach Anspruch 1, **dadurch gekennzeichnet, dass** es außerdem einen Schritt (D50) des Sendens einer Vorhandenseinsnachricht bei Empfang (D40) einer Anforderung der Ersatzvorrichtung enthält.

5. Sicherungsverfahren nach Anspruch 1, **dadurch gekennzeichnet, dass** es außerdem aufweist:
- einen Schritt (D100) des Sendens einer Anforderung an die Ersatzvorrichtung, die Kontrolle der Wiedergabe der Wiedergabeliste (L_{DMC}) zu übernehmen; und
- einen Schritt (D110) des Erhalts, als Antwort auf das Senden, einer Information (RG) über den Fortschrittszustand der Wiedergabe der Wiedergabeliste.

6. UPnP-Kontrollvorrichtung (DMC), die aufweist:
- Einrichtungen (11, 14) zum Finden einer Ersatzvorrichtung (BCP), die eine Wiedergabe von Inhalten einer Wiedergabeliste steuern kann;
- Einrichtungen (14) zum Senden einer mindestens einen Multimedia-Inhalt aufweisenden Wiedergabeliste (L_{DMC}) an die Ersatzvorrichtung (BCP),
- Einrichtungen zum Senden einer Benachrichtigung an die Ersatzvorrichtung (BCP), damit sie die Kontrolle der Wiedergabe der Inhalte der gesendeten Wiedergabeliste (L_{DMC}) übernimmt.

7. Ersatzverfahren einer UPnP-Kontrollvorrichtung (DMC), das von einer Ersatzvorrichtung (BCP) in einem Netz durchgeführt wird, wobei das Verfahren aufweist:
- einen Schritt (B34) des Erhalts, ausgehend von der UPnP-Kontrollvorrichtung, einer mindestens einen über einen Server (DMS) zugänglichen Multimedia-Inhalt aufweisenden Wiedergabeliste (L_{DMC}), die von mindestens einer Wiedergabevorrichtung (DMR) wiederzugeben ist;
- einen Schritt (B20) des Findens des Servers (DMS) ;
- einen Schritt (B20) des Findens der Wiedergabevorrichtung (DMR);
- einen Schritt (B40, B70) der Erfassung mindestens eines Ereignisses, das anzeigt, dass die Ersatzvorrichtung die UPnP-Kontrollvorrichtung ersetzen soll; und
- bei Erfassung des Ereignisses, einen Schritt (D80) des Sendens einer Nachricht an die Wiedergabevorrichtung (DMR), um bei der Kontrolle der Wiedergabe mindestens eines der Inhalte der erhaltenen Wiedergabeliste die Aufgabe zu übernehmen.

8. Ersatzverfahren nach Anspruch 7, bei dem das Ereignis der Empfang einer von der UPnP-Kontrollvorrichtung (DMC) kommenden Benachrichtigung ist.

9. Ersatzverfahren nach Anspruch 7, bei dem das Ereignis die Abwesenheit des Empfangs einer Vorhandenseinsnachricht der UPnP-Kontrollvorrichtung (DMC) am Ende einer bestimmten Zeit nach dem Senden einer Anforderung der Ersatzvorrichtung (BCP) ist.

10. Ersatzverfahren nach Anspruch 7, **dadurch gekennzeichnet, dass** es einen Schritt (B10) des Sendens einer Meldungsnachricht des Vorhandenseins der Ersatzvorrichtung (BCP) im Netz aufweist.

11. Ersatzverfahren nach Anspruch 7, **dadurch gekennzeichnet, dass** der Schritt (B34) des Erhalts im Rahmen eines allgemeinen Schritts (B30) der Synchronisation der Wiedergabeliste (L_{BCP}) mit einer Wiedergabeliste (L_{DMC}) der Kontrollvorrichtung (DMC) erfolgt.

12. Ersatzverfahren nach Anspruch 7, **dadurch gekennzeichnet, dass** es aufweist
- einen Schritt (B80) des Empfangs einer Anforderung der UPnP-Kontrollvorrichtung (DMC), die Kontrolle der Wiedergabe der Wiedergabeliste (L_{BCP}) zu übernehmen; und
- einen Schritt (B90) des Beendens der Kontrolle der Wiedergabe der Wiedergabeliste; und
- einen Schritt (B100) des Sendens einer Information (RG) über den Fortschritt der Wiedergabe der Wiedergabeliste an die UPnP-Kontrollvorrichtung (DMC).

13. Ersatzvorrichtung (BCP) einer UPnP-Kontrollvorrichtung (DMC), die in einem Netz verwendet werden kann, wobei die Ersatzvorrichtung aufweist:
- Einrichtungen (24) zum Erhalt, ausgehend von der UPnP-Kontrollvorrichtung, einer mindestens einen über einen Server (DMS) zugänglichen Multimedia-Inhalt aufweisenden Wiedergabeliste (L_{DMC}), die von mindestens einer Wiedergabevorrichtung (DMR) wiederzugeben ist;
- Einrichtungen (21) zum Finden des Servers (DMS) und der Wiedergabevorrichtung (DMR);
- Einrichtungen (21) zur Erfassung mindestens eines Ereignisses (B40, B70), das anzeigt, dass die Ersatzvorrichtung die UPnP-Kontrollvorrichtung ersetzen soll; und
- Einrichtungen (24) zum Senden, nach der Erfassung des Ereignisses, einer Nachricht an die Wiedergabevorrichtung (DMR), um bei der Kontrolle der Wiedergabe mindestens eines der Inhalte der erhaltenen Wiedergabeliste die Aufgabe zu übernehmen.

14. Computerlesbarer Aufzeichnungsträger (13), auf dem ein Computerprogramm aufgezeichnet ist, das Anweisungen zur Ausführung der Schritte des Sicherungsverfahrens nach einem der Ansprüche 1 bis 5 enthält.

15. Computerlesbarer Aufzeichnungsträger (23), auf dem ein Computerprogramm aufgezeichnet ist, das Anweisungen zur Ausführung der Schritte des Ersatzverfahrens nach einem der Ansprüche 7 bis 12 enthält.

## Claims

1. Reliability method implemented by a UPnP control device (DMC) in a network (HN), this method including:
- a step (D10) of discovering a spare device (BCP), able to control a rendering of content in a rendering list;
- a step (D24) of sending, to said spare device (BCP), a rendering list (L_{DMC}) containing at least one multimedia content;
- a step (D80) of sending a notification message to said spare device (BCP) so that it takes control of the rendering of the content in the sent rendering list (L_{DMC}) .

2. Reliability method according to Claim 1, **characterized in that** said step of sending the notification message is performed after detection (D60), by the UPnP control device, of a transition to a state of unavailability of said UPnP control device (DMC) .

3. Reliability method according to Claim 1, **characterized in that** said step (D24) of sending the rendering list (L_{DMC}) is performed as part of a general step (D20) of synchronizing said rendering list (L_{DMC}) with a rendering list (L_{BCP}) of said spare device (BCP).

4. Reliability method according to Claim 1, **characterized in that** it furthermore includes a step (D50) of sending a presence message upon reception (D40) of a request from said spare device.

5. Reliability method according to Claim 1, **characterized in that** it furthermore includes:
- a step (D100) of sending, to said spare device, a request to regain control of the rendering of said rendering list (L_{DMC}) ; and
- a step (D110) of acquiring, in response to said sending, an information (RG) regarding the state of progress of the rendering of said rendering list.

6. UPnP control device (DMC) including:
- means (11, 14) for discovering a spare device (BCP) able to control a rendering of content in a rendering list;
- means (14) for sending, to said spare device (BCP), a rendering list (L_{DMC}) containing at least one multimedia content;
- means for sending a notification message to said spare device (BCP) so that it takes control of the rendering of the content in the sent rendering list (L_{DMC}) .

7. Method for backing up a UPnP control device (DMC), implemented by a spare device (BCP) in a network, said method including:
- a step (B34) of acquiring, from said UPnP control device, a rendering list (L_{DMC}) containing at least one multimedia content accessible via a server (DMS), to be rendered by at least one rendering device (DMR);
- a step (B20) of discovering said server (DMS);
- a step (B20) of discovering said rendering device (DMR);
- a step (B40, B70) of detecting at least one event indicating that the spare device should substitute itself for the UPnP control device; and
- a step (D80) of sending, to said rendering device (DMR), upon detection of said event, a message to take over control of the rendering of at least one of the items of content in the acquired rendering list.

8. Backup method according to Claim 7, wherein said event is the reception of a notification message from the UPnP control device (DMC).

9. Backup method according to Claim 7, wherein said event is the lack of reception, after a predetermined time following the sending of a request from the spare device (BCP), of a presence message from the UPnP control device (DMC).

10. Backup method according to Claim 7, **characterized in that** it includes a step (B10) of sending a message signalling the presence of said spare device (BCP) in said network.

11. Backup method according to Claim 7, **characterized in that** said acquisition step (B34) is performed as part of a general step (B30) of synchronizing said rendering list (L_{BCP}) with a rendering list (L_{DMC}) of said control device (DMC).

12. Backup method according to Claim 7, **characterized in that** it includes
- a step (B80) of receiving a request from said UPnP control device (DMC) to resume controlling the rendering of said rendering list (L_{BCP}) ; and
- a step (B90) of suspension of control the rendering of said rendering list; and
- a step (B100) of sending, to said UPnP control device (DMC), an information (RG) regarding the progress of the rendering of said rendering list.

13. Device (BCP) for backing up a UPnP control device (DMC) able to be used in a network, said spare device including:
- means (24) for acquiring, from said UPnP control device, a rendering list (L_{DMC}) containing at least one multimedia content accessible via a server (DMS), to be rendered by at least one rendering device (DMR);
- means (21) for discovering said server (DMS) and said rendering device (DMR);
- means (21) for detecting at least one event (B40, B70) indicating that the spare device should substitute itself for the UPnP control device; and
- means (24) for sending, to said rendering device (DMR), following detection of said event, a message to take over control of the rendering of at least one of the items of content in the acquired rendering list.

14. Computer-readable recording medium (13) on which a computer program comprising instructions for executing the steps of the reliability method according to any one of Claims 1 to 5 is recorded.

15. Computer-readable recording medium (23) on which a computer program comprising instructions for executing the steps of the spare method according to any one of Claims 7 to 12 is recorded.
